# EUROPEAN PATENT APPLICATION

(11) **EP 3 618 060 A1**
(43) Date of publication of application: **04.03.2020**
(21) Application number: 18791284.5
(22) Date of filing: 12.04.2018
(51) Int. Cl.: G10L 15/10, G10L 13/08

(54) **SIGNAL PROCESSING DEVICE, METHOD, AND PROGRAM**

(30) Priority: 26.04.2017 JP 2017086820
(71) Applicant: Sony Corporation, Tokyo 108-0075 (JP)
(72) Inventor: SAITO Mari, Tokyo 108-0075 (JP)
(74) Representative: MFG Patentanwälte Meyer-Wildhagen Meggle-Freund Gerhard PartG mbB
(86) International application number: PCT/JP2018/015354
(87) International publication number: WO 2018/198791

(57) **Abstract**

The present disclosure relates to a signal processing apparatus and method, and a program which make relationship between users better.

A speech input unit inputs speech of a user who is a sender. A message converting unit converts a message into a message which makes relationship between users smooth on the basis of a result of feeling estimation estimated in accordance with content of the message accepted from the user who is the sender using the input speech. The present disclosure can be applied to, for example, a message converting system including a signal processing apparatus.

## Description

### TECHNICAL FIELD

The present disclosure relates to a signal processing apparatus and method, and a program, and, more particularly, to a signal processing apparatus and method, and a program which make relationship between users better.

### BACKGROUND ART

In a case where users have a conversation, there has been a case where the users might be too emotional to maintain good communication.

For example, Patent Document 1 describes a proposal for smoothly performing indirect communication by bringing diversity to a message to be conveyed without using an image of a sender of the message. In this proposal, a message has been conveyed using agent image data having a plurality of modes corresponding to parameterized feeling for speech input.

### CITATION LIST

### PATENT DOCUMENT

Patent Document 1: Japanese Patent Application Laid-Open No. 2002-41279

### SUMMARY OF THE INVENTION

### PROBLEMS TO BE SOLVED BY THE INVENTION

However, actually, there has been a case where users were getting onto bad terms as a result of messages being conveyed as intended.

The present disclosure has been made in view of such circumstances, and is directed to making relationship between users better.

### SOLUTIONS TO PROBLEMS

A signal processing apparatus according to an aspect of the present technology includes a speech input unit configured to input speech of a user who is a sender; and a message converting unit configured to convert a message into a message which makes relationship between users smooth in accordance with content of the message accepted from the user who is the sender on the basis of a result of feeling estimation estimated using the speech input by the speech input unit.

The message converting unit may further include an image input unit configured to input an image of the user who is the sender, and convert the message into a message which makes relationship between users smooth in accordance with content of the message accepted from the user who is the sender on the basis of a result of feeling estimation estimated using the speech input by the speech input unit and the image input by the image input unit.

The message converting unit may convert the message into a message with positive expression in a case where the message includes negative expression.

A notification control unit configured to control a notification for confirming to the user who is the sender as to whether or not to convey the message with positive expression converted by the message converting unit may further be included.

The message converting unit may add presumption or opinion on a message conveying side to the message in a case where the message includes negative expression.

The message converting unit may convert the message into a message with more negative expression in accordance with relationship with a speech partner or a situation even in a case where the message includes negative expression.

The message converting unit may convert the message into a message with more positive expression in a case where the message includes positive expression.

A feedback unit configured to, in a case where there is a response from a user who is a receiver who receives the message converted by the message converting unit, output the response from the user who is the receiver and content of the message converted by the message converting unit, to the user who is the sender, may further be included.

In a case where there is no response from the user who is the receiver who receives the message converted by the message converting unit, the feedback unit may output content of the message converted by the message converting unit, to which expression which makes relationship between users smooth is added, to the user who is the sender.

An output control unit configured to output content of the message converted by the message converting unit to the user who is the receiver who is to receive the message may further be included.

The output control unit may output the content of the message converted by the message converting unit to the user who is the receiver at a timing in accordance with a situation of the user who is the receiver.

The output control unit may output the content of the message converted by the message converting unit to the user who is the receiver after making relationship with the user who is the receiver favorable through conversation with the user who is the receiver or through presentation of content.

The output control unit may output the content of the message converted by the message converting unit to the user who is the receiver along with an image or music.

The message converting unit may convert the message into a message with expression in a positive or negative direction which is judged using context upon output of the message.

The message converting unit may convert the message into a message with expression in a positive or negative direction which is judged using context upon reception of the message and context upon output of the message.

A registering unit configured to register an NG word may further be included, and the message converting unit may prohibit use of the NG word registered by the registering unit.

In a case where tone of the message is hurtful, the message converting unit may perform processing of converting the message into text or speech output and causes the converted message to be presented to the user who is the sender.

In a case where the message is not consistent with facial expression or action of the user who is the sender, the message converting unit may add complementary information to the message.

In a case where an image of the user who is the sender is output in addition to the message, in a case where the user who is the sender gives inappropriate facial expression or action, the message converting unit may convert also the image of the user who is the sender.

A signal processing method executed by a signal processing apparatus according to an aspect of the present technology includes: inputting speech of a user who is a sender; and converting a message into a message which makes relationship between users smooth on the basis of a result of feeling estimation estimated in accordance with content of the message accepted from the user who is the sender using the input speech.

A program according to an aspect of the present technology causes a computer to function as: a speech input unit configured to input speech of a user who is a sender; and a message converting unit configured to convert a message into a message which makes relationship between users smooth in accordance with content of the message accepted from the user who is the sender on the basis of a result of feeling estimation estimated using the speech input by the speech input unit.

According to an aspect of the present technology, speech of a user who is a sender is input. Then, a message is converted into a message which makes relationship between users smooth on the basis of a result of feeling estimation estimated in accordance with content of the message accepted from the user who is the sender using the input speech.

### EFFECTS OF THE INVENTION

According to the present disclosure, it is possible to process signals. Particularly, it is possible to make relationship between users better.

### BRIEF DESCRIPTION OF DRAWINGS

Fig. 1 is a diagram explaining operation of a message converting system to which the present technology is applied.
Fig. 2 is a block diagram illustrating a configuration example of an agent.
Fig. 3 is a flowchart explaining message conversion processing.
Fig. 4 is a flowchart explaining feeling detection processing using utterance content in step S22 in Fig. 3.
Fig. 5 is a flowchart explaining another example of the feeling detection processing using utterance content in step S22 in Fig. 3.
Fig. 6 is a flowchart explaining feeling detection processing using facial expression in step S23 in Fig. 3.
Fig. 7 is a flowchart explaining another example of the feeling detection processing using facial expression in step S23 in Fig. 3.
Fig. 8 is a block diagram illustrating an example of main components of a computer.

### MODE FOR CARRYING OUT THE INVENTION

Exemplary embodiments for implementing the present disclosure (which will be referred to as embodiments below) will be described below.

### <System of present technology>

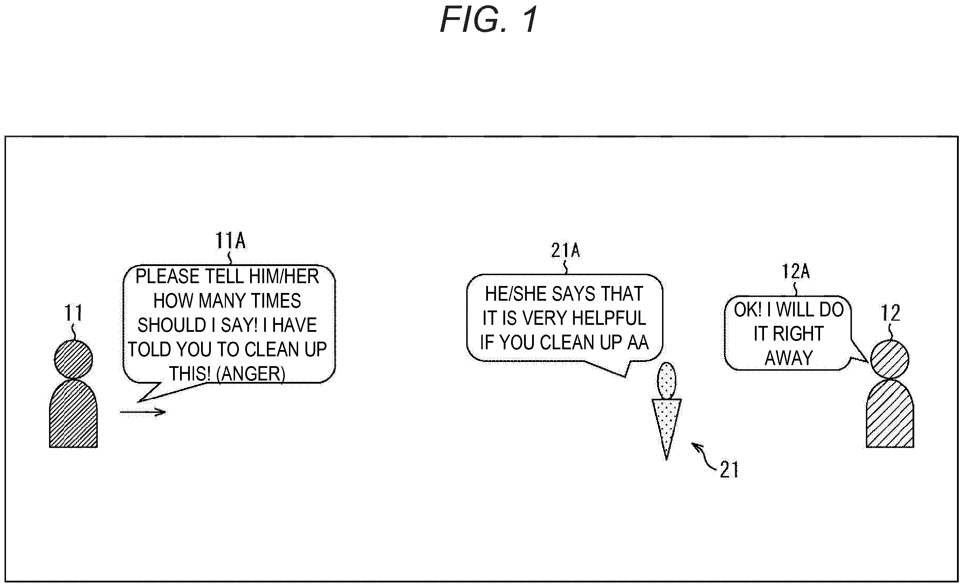

Operation of a message converting system to which the present technology is applied will be described first with reference to Fig. 1.

In an example in Fig. 1, the message converting system includes an agent 21 which is a signal processing apparatus to which the present technology is applied. The agent 21 recognizes content to be conveyed and non-verbal expression (facial expression, a way of saying) from a message 11A of "please tell him/her how many times should I say! I have told you to clean up this. (anger)" from a user 11 who is a sender and converts the content in a positive direction if the way of saying is negative. The agent 21, for example, converts the message 11A into a message 21A of "he/she says that it is very helpful if you help AA" and conveys the converted message 21A to a user 12 who is a receiver.

In response to this, the user 12 returns a response 12A of "OK. I will do it right away" to the agent 21.

In a case where the response 12A is received from the user 12, the agent 21 reports to the user 11 who is a sender how a message requested by the agent 21 is conveyed upon conveyance of the response 12A to the user 11, for example, through control by an output control unit 49 which will be described later. By making a report in this manner, it is possible to guide the user 11 in a positive direction.

However, in a case where there is no response although it is desired to receive a response from the user 12, for example, in a case where the user 12 ignores the message 21A, the agent 21 adds expression which makes communication smooth between the users or expression which mitigates a situation such as expression indicating that the user 12 seems busy or the user 12 seems concentrated, to the user 11. For example, in a case where it is detected from (an image or speech of) the user 12 that given expression is negative, the agent 21 makes expression more moderate than the given expression or uses expression which expresses lack of confidence in a detection result by the agent itself, so as to prevent the negative given expression from being directly conveyed to the user 11.

Note that, in the example in Fig. 1, an example is illustrated where, in a case where the message 11A of the user 11 who is a sender is a negative way of saying such as anger, the content is converted in a positive direction so as to reduce negativeness. Meanwhile, in a case where the message 11A of the user 11 is a positive way of saying, it would be better to convey the content more positively in an exaggerated manner to intensify the positiveness.

That is, for example, in the message 11A of the user 11, expression of anxiety or concern other than anger is intensified, and expression of anger is converted into expression of anxiety. For example, in a case where the message 11A of the user 11 is intonation, the intonation is converted into a calm tone, and speed is converted into lower speed. Further, for example, in a case where the message 11A of the user 11 is expression of joy, or the like, the expression is conveyed in an exaggerated manner.

Through the operation described above, according to the message converting system, it is possible to make relationship between the users better. Specific examples will be described below.

### <Configuration example of agent>

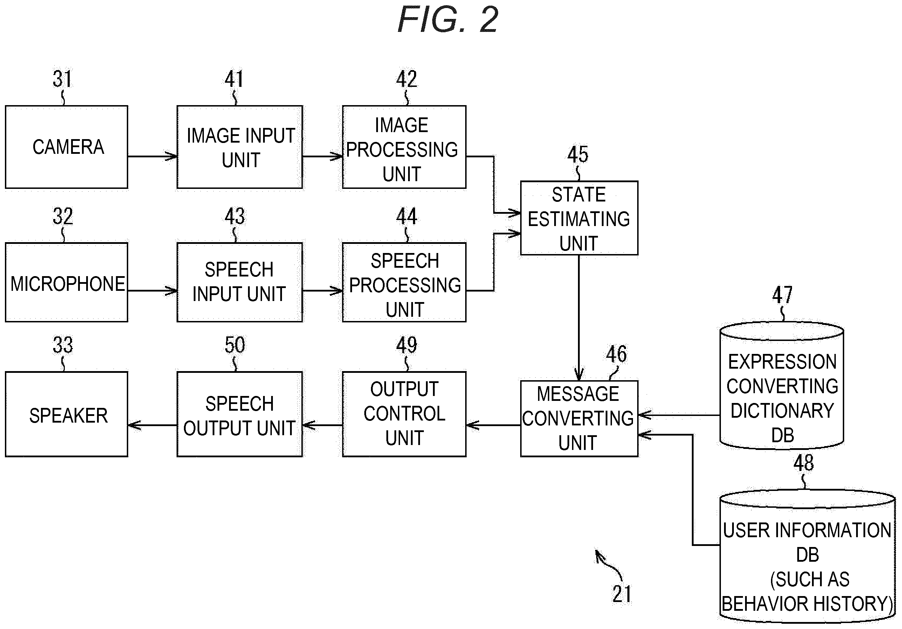

Fig. 2 is a block diagram illustrating a configuration example of the agent in Fig. 1.

The agent 21 is a signal processing apparatus to which the present technology is applied, and a physical agent like a robot, or a software agent installed in a mobile terminal such as a smartphone and stationary equipment such as a personal computer.

In an example in Fig. 2, a camera 31, a microphone 32, and a speaker 33 are connected to the agent 21. The agent 21 includes an image input unit 41, an image processing unit 42, a speech input unit 43, a speech processing unit 44, a state estimating unit 45, a message converting unit 46, an expression converting dictionary DB 47, a user information DB 48, an output control unit 49, and a speech output unit 50.

The camera 31 inputs a captured image of a subject to the image input unit 41. The microphone 32 collects speech of the user 11 and the user 12 and inputs the collected speech to the speech input unit 43. The speaker 33 outputs speech from the speech output unit 50.

The image input unit 41 supplies the image from the camera 31 to the image processing unit 42. The image processing unit 42 performs predetermined image processing on the supplied image. The image processing unit 42 detects a face from the image subjected to the image processing, detects facial expression from the detected face and supplies a detection result of the facial expression detection to the state estimating unit 45. Note that the surrounding image information for estimating context is also supplied. Further, the image processing unit 42 detects action from the image subjected to the image processing and supplies a detection result of the action detection to the state estimating unit 45.

The speech input unit 43 supplies speech from the microphone 32 (such as speech of a message of a user who is a sender or speech of a response of a user who is a receiver, and surrounding sound for estimating context) to the speech processing unit 44. The speech processing unit 44 performs predetermined speech processing on the supplied speech. The speech processing unit 44 recognizes the speech from the speech subjected to the speech processing, performs semantic analysis, and supplies a result of the semantic analysis and a message of the user (hereinafter, the message includes a response) to the state estimating unit 45. Further, the speech processing unit 44 performs intonation analysis on the speech subjected to the speech processing and supplies a result of the intonation analysis to the state estimating unit 45.

The state estimating unit 45 estimates feeling of the user who is a sender with reference to the result of the facial expression detection and the result of the action detection from the image processing unit 42, and the result of the semantic analysis and the result of the intonation analysis from the speech processing unit 44, and supplies a result of the feeling estimation and the message of the user to the message converting unit 46. These results may be recorded in a database for each user.

The message converting unit 46 converts the message from the user with reference to the expression converting dictionary DB 47 and the user information DB 48 in which behavior history, or the like, are stored, using the image input by the image input unit 41 and the speech input by the speech input unit 43. That is, the message converting unit 46 converts the message from the user with reference to the expression converting dictionary DB 47 and the user information DB 48 in which the behavior history, or the like, are stored, on the basis of the result of the feeling estimation estimated by the state estimating unit 45 using the image input by the image input unit 41 and the speech input by the speech input unit 43. The message converting unit 46 supplies the converted message from the user to the output control unit 49.

For example, as described above with reference to Fig. 1, in the example in Fig. 1, an example is illustrated where, in a case where the message 11A of the user 11 who is a sender is a negative way of saying such as anger, the content is converted in a positive direction so as to reduce negativeness. For example, in a case where the message 11A of the user 11 is a positive way of saying, it would be better to convey the content in an exaggerated manner to intensify positiveness. Further, in the message 11A of the user 11, the expression of anxiety or concern other than anger may be intensified, and the expression of anger may be converted into expression of anxiety. For example, in a case where the message 11A of the user 11 is intonation, the intonation may be converted into a calm tone, and speed may be converted into lower speed. Further, for example, in a case where the message 11A of the user 11 is expression of joy, or the like, the expression may be conveyed in an exaggerated manner.

The output control unit 49 causes the speech output unit 50 to output the message converted by the message converting unit 46 under control by the message converting unit 46. The speech output unit 50 outputs the message (including a response) from the speaker 33 as speech under control by the output control unit 49.

Note that, while, in the example in Fig. 2, a configuration example is illustrated where output of the message is speech output, as another configuration, it is also possible to employ a configuration where the message converting system includes a display unit, and the agent includes a display control unit to realize visual notification or visual and auditory notification. Further, it is also possible to perform conversion in a positive direction using other modes. For example, in a case where the agent is personalized like robot animation, facial expression and action are used to convey a message. Further, for example, it is also possible to create positive impression (in some cases, negative impression) using color of an electric light, BGM, a background image, or the like, upon conveyance of a message.

Note that the following control can be performed upon conveyance.
- A negative/positive direction upon conveyance is judged in accordance with context when the agent 21 utters.
- It is necessary to control a timing of a message so that a message is not conveyed when a speech partner of the message (that is, a user who is a receiver) is negative, or the like.
- It is preferable to convey a message after environments of the agent 21 and the speech partner are made favorable, that is, the speech partner of the message is put into a positive state by having an ice-breaking conversation or presenting content, or the like, upon conveyance of a message.
- Both context upon receipt of a message and context upon expression are prepared, and context in accordance with a situation at that time is used to judge a negative/positive direction.
- It is also possible to change a way of paraphrase in accordance with reaction of the speech partner (that is, the user who is a receiver) or change a method for paraphrase in accordance with relationship with the speech partner. For example, if it is not effective although a message is conveyed using soft expression, it is possible to change a method of paraphrase so that a message is conveyed using strong expression.

Further, it is also possible to convert the message in a direction which makes relationship worse even if the message is a negative message, depending on a situation or a request from the user, for example, in a case where the message is a message to a speech partner whom the user desires to break up with, or in a case where the user cannot tell the speech partner strongly.

### <Operation of message converting system>

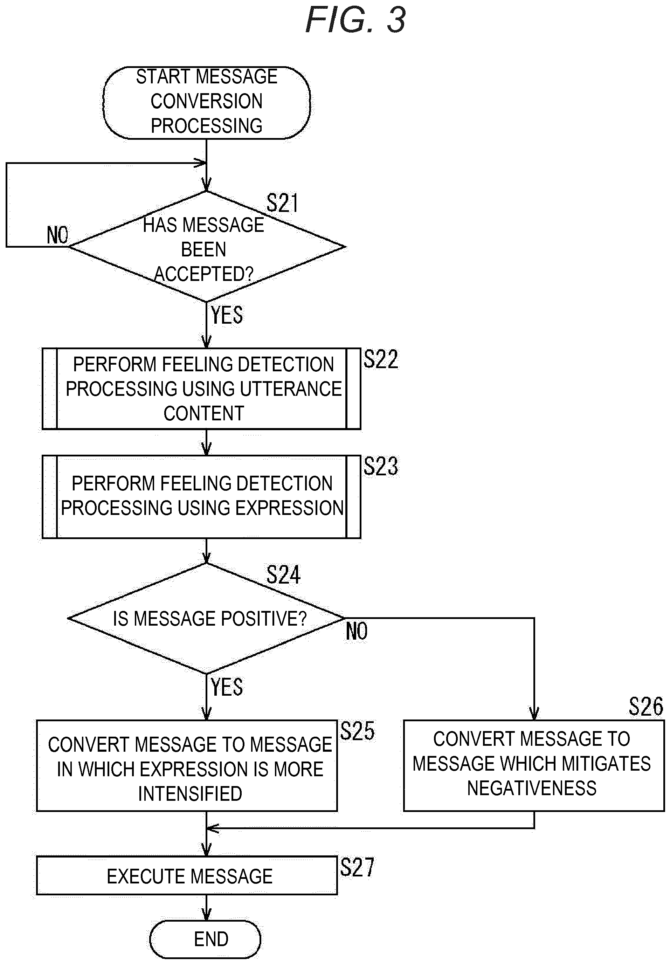

Message conversion processing of the message converting system will be described next with reference to the flowchart in Fig. 3.

For example, the user 11 who is a sender emits a message toward the microphone 32. Alternatively, the user 12 who is a receiver who receives a message emits a response toward the microphone 32. The microphone 32 collects speech of the user 11 and the user 12 and inputs the collected speech to the speech input unit 43. The speech input unit 43 supplies the input speech (a message and a response, hereinafter, collectively referred to as a message) to the speech processing unit 44.

In step S21, the speech input unit 43 stands by until it is determined that a message is accepted, and, in a case where it is determined that a message is accepted, the processing proceeds to step S22. Note that, at this time, the camera 31 inputs a captured image of the user 11 to the image input unit 41, and the image input unit 41 supplies the image from the camera 31 to the image processing unit 42.

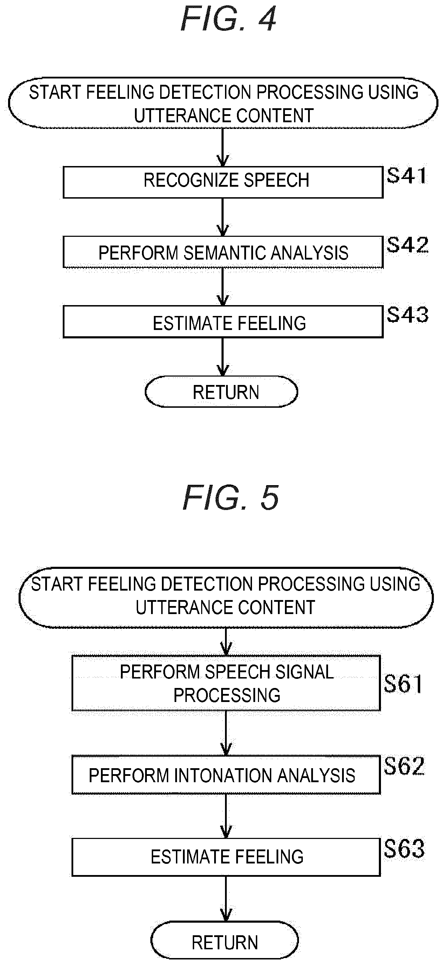

In step S22, the speech processing unit 44 and the state estimating unit 45 perform feeling detection processing using utterance content. Note that this feeling detection processing using utterance content will be described later with reference to Fig. 4 or Fig. 5. Through step S22, a result of the feeling detection using the utterance content is supplied to the message converting unit 46.

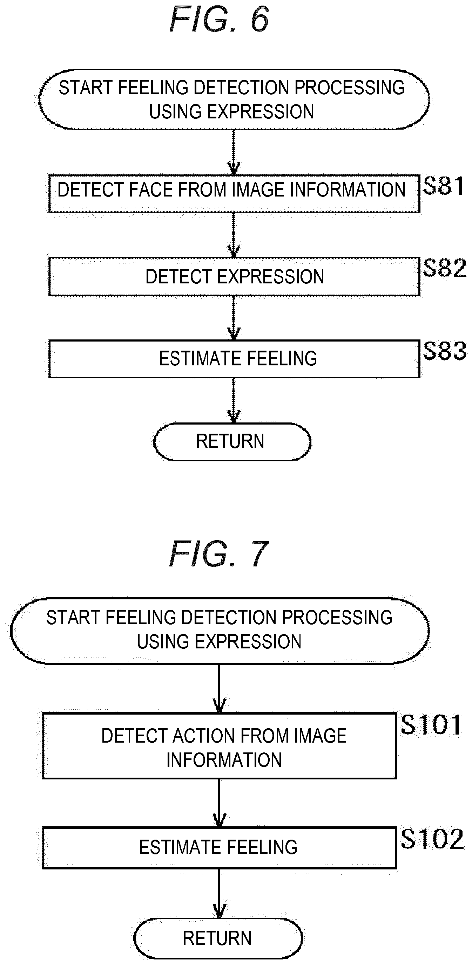

Further, in step S23, the image processing unit 42 and the state estimating unit 45 perform feeling detection processing using facial expression. Note that this feeling detection processing using facial expression will be described later with reference to Fig. 6 or Fig. 7. Through step S23, a result of the feeling detection using facial expression is supplied to the message converting unit 46. Further, because an individual difference is assumed concerning the feeling detection, it is also possible to store input information of speech and an image for each user, and analyze a steady state, a range of rise and fall of expression, or the like, of the user. Further, it is also possible to record a difference in expression, or the like, in accordance with a speech partner, and change a determination result in accordance with the speech partner.

In step S24, the message converting unit 46 determines whether or not the accepted message is a positive message with reference to the expression converting dictionary DB 47 and the user information DB 48. In a case where it is determined in step S24 that the message is a positive message, the processing proceeds to step S25.

In step S25, the message converting unit 46 converts the accepted message into a message in which expression is more intensified with reference to the expression converting dictionary DB 47 and the user information DB 48. Then, the processing proceeds to step S27.

Meanwhile, in a case where it is determined in step S24 that the message is not a positive message, that is, the message is a negative message, the processing proceeds to step S26. In step S26, the message converting unit 46 converts the accepted message into a message which mitigates negativeness with reference to the expression converting dictionary DB 47 and the user information DB 48. Then, the processing proceeds to step S27.

In step S27, the message converting unit 46 executes the message converted in step S25 or S26. That is, the message converting unit 46 supplies the converted message from the user to the output control unit 49. The output control unit 49 causes the speech output unit 50 to output the message converted by the message converting unit 46 under control by the message converting unit 46. The speech output unit 50 outputs the message (including a response) from the speaker 33 as speech under control by the output control unit 49.

Note that, while, in an example in Fig. 3, description is provided concerning message conversion processing in a case where there is a message, in a case where feeling expressed by the user to a specific speech partner (regardless of whether or not there is a message) is negative feeling, it is also possible to convey the feeling while adding feeling of the agent 21 of anxiety or concern and convey that the user seems angry when the negative feeling is conveyed to the speech partner.

Further, in a case where feeling expressed by the user to a specific speech partner is positive feeling, it is also possible to convey to the speech partner that "he/she said **" or "he/she was delighted" or it is also possible to positively convey a message which makes relationship better such as "he/she cleaned up a portion which he/she cannot usually do" and "he/she started to clean up right after getting home".

Still further, it is also possible to make a proposal for paraphrase upon conveyance of the message. For example, in a case where a message in a negative expression is requested, the message may be converted into positive expression, and the output control unit 49 may control a notification for confirmation to the user who is a sender, for example, "is it OK to say **?".

It is also possible to convey the message as presumption or opinion of the agent such as "he/she said **, is he/she angry?" and "Mom said "...", you had better reply right away", or it is also possible to convey feeling detected by the agent in a diffident manner.

Feeling detection processing using utterance content in step S22 in Fig. 3 will be described next with reference to the flowchart in Fig. 4.

In step S41, the speech processing unit 44 recognizes speech from the speech subjected to speech processing.

In step S42, the speech processing unit 44 performs semantic analysis using a result of the speech recognition. The speech processing unit 44 supplies a result of the semantic analysis and a message of the user to the state estimating unit 45.

In step S43, the state estimating unit 45 estimates feeling of the user 11 who is a sender with reference to the result of the semantic analysis from the speech processing unit 44 and supplies a result of the feeling estimation and the message of the user 11 to the message converting unit 46. Then, the processing returns to step S22 in Fig. 3, and the processing in step S22 and subsequent steps is repeated.

Another example of the feeling detection processing using utterance content in step S22 in Fig. 3 will be described next with reference to the flowchart in Fig. 5.

In step S61, the speech processing unit 44 performs speech signal processing from the speech subjected to speech processing.

In step S62, the speech processing unit 44 performs the intonation analysis using the result of the speech signal processing. The speech processing unit 44 supplies a result of the intonation analysis and a message of the user to the state estimating unit 45.

In step S63, the state estimating unit 45 estimates feeling of the user 11 who is a sender with reference to the result of the intonation analysis from the speech processing unit 44 and supplies a result of the feeling estimation and the message of the user 11 to the message converting unit 46. Then, the processing returns to step S22 in Fig. 3, and the processing in step S22 and subsequent steps is repeated.

Feeling detection processing using facial expression in step S23 in Fig. 3 will be described next with reference to the flowchart in Fig. 6.

In step S81, the image processing unit 42 detects a face from the image subjected to image processing.

In step S82, the image processing unit 42 detects facial expression using a result of the face detection. The image processing unit 42 supplies the result of the facial expression detection and the message of the user to the state estimating unit 45.

In step S83, the state estimating unit 45 estimates feeling of the user 11 who is a sender with reference to the result of the semantic analysis from the speech processing unit 44 and supplies a result of the feeling estimation and the message of the user 11 to the message converting unit 46. Then, the processing returns to step S22 in Fig. 3, and the processing in step S22 and subsequent steps is repeated.

Another processing of the feeling detection processing using facial expression in step S23 in Fig. 3 will be described next with reference to the flowchart in Fig. 7.

In step S101, the image processing unit 42 detects action from the speech subjected to image processing. The image processing unit 42 supplies the result of the action detection and the message of the user to the state estimating unit 45.

In step S102, the state estimating unit 45 estimates feeling of the user 11 who is a sender with reference to the result of the action detection from the image processing unit 42 and supplies a result of the feeling estimation and the message of the user 11 to the message converting unit 46. Then, the processing returns to step S22 in Fig. 3, and the processing in step S22 and subsequent steps is repeated.

Note that, while processing of feeling estimation in step S43, S63, and S83 is individually described, feeling estimation may be performed using all the detection results from the speech and the image.

As described above, according to the present technology, relationship between the users becomes better even in a case where the same content is conveyed.

Note that, in a case where awkward relationship is detected during processing, it is also possible to change atmosphere by notifying a speech partner and performing processing of using a notification of schedule which is performed together, or the like. Further, it is also possible to judge content and mix content with strong tone and content with soft tone in favorable order instead of in chronological order. Further, it is also possible to request another user to mediate the relationship.

Further, concerning conversion of language, for example, NG words (for example, words which abuse a speech partner, such as fool) are registered in a database such as the expression converting dictionary DB 47, and the registered NG words are prevented from being conveyed. It is also possible to present a message in which a word is intentionally erroneously recognized and convert the word in a positive direction. Ultimately, it is possible to make settings so that the message can be converted into only positive words.

As conversion of a moving image and text, in a case where tone is hurtful, processing of converting the message into text or speech output may be performed. Further, even in a case where expression is not converted, the message may be converted into text using text to speech (TTS) in which tone is weakened. It is also possible to cool down the user by presenting the message which is converted into text and convert information to be transmitted into text. Further, it is also possible to cut and paste previous log when a person is in a good temper or refrain from leaving hurtful words in records.

It is also possible to provide multi-modal filtering. Specifically, inappropriate motion in facial expression, action, gesture, or the like, is filtered or replaced if found. This may be an avatar or live-action, and in a case where a message uses an image of a speech partner, facial expression may be manipulated (image may be converted). In this case, it is also possible to use speech of the user and an image recorded in the past.

Further, in a case where an ambivalent state of speech and an image is detected, the agent adds complementary information in a case where utterance content is not consistent with expression of feeling (such as, for example, a case where a person looks sick although the person says "I'm OK").

Note that a range in which the present technology is applied includes communication application of a smartphone and wearable equipment.

### <Computer>

The series of processes described above can be executed by hardware, and can also be executed in software. In the case of executing the series of processes by software, a program forming the software is installed on a computer. Herein, the term computer includes a computer built into special-purpose hardware, a computer able to execute various functions by installing various programs thereon, such as a general-purpose personal computer, for example, and the like.

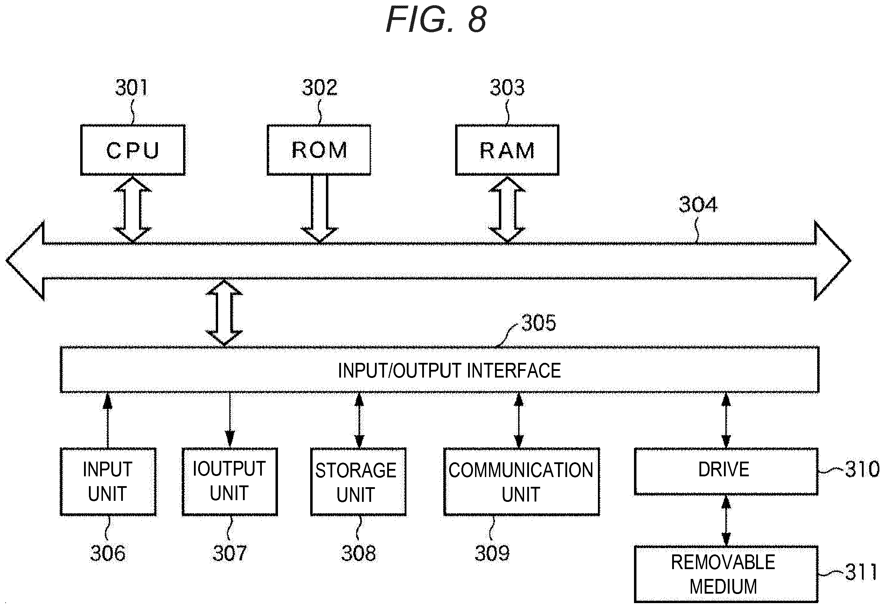

Fig. 8 is a block diagram illustrating an exemplary hardware configuration of a computer that executes the series of processes described above according to a program.

In the computer illustrated in Fig. 8, a central processing unit (CPU) 301, read-only memory (ROM) 302, and random access memory (RAM) 303 are interconnected through a bus 304.

Additionally, an input/output interface 305 is also connected to the bus 304. An input unit 306, an output unit 307, a storage unit 308, a communication unit 309, and a drive 310 are connected to the input/output interface 305.

The input unit 306 includes a keyboard, a mouse, a microphone, a touch panel, an input terminal, and the like, for example. The output unit 307 includes a display, a speaker, an output terminal, and the like, for example. The storage unit 308 includes a hard disk, a RAM disk, non-volatile memory, and the like, for example. The communication unit 309 includes a network interface, for example. The drive 310 drives a removable medium 311 such as a magnetic disk, an optical disc, a magneto-optical disc, or semiconductor memory.

In a computer configured as above, the series of processes described above is performed by having the CPU 301 load a program stored in the storage unit 308 into the RAM 303 via the input/output interface 305 and the bus 304, and execute the program, for example. Additionally, data required for the CPU 301 to execute various processes and the like is also stored in the RAM 303 as appropriate.

The program executed by the computer (CPU 301) may be applied by being recorded onto the removable medium 311 as an instance of packaged media or the like, for example. In this case, the program may be installed in the storage unit 308 via the input/output interface 310 by inserting the removable medium 311 into the drive 310.

In addition, the program may also be provided via a wired or wireless transmission medium such as a local area network, the Internet, or digital satellite broadcasting. In this case, the program may be received by the communication unit 309 and installed in the storage unit 308.

Otherwise, the program may also be preinstalled in the ROM 302 or the storage unit 308.

Furthermore, an embodiment of the present technology is not limited to the embodiments described above, and various changes and modifications may be made without departing from the scope of the present technology.

For example, in this specification, a system means a set of a plurality of constituent elements (e.g., devices or modules (parts)), regardless of whether or not all the constituent elements are in the same housing. Accordingly, a plurality of devices that is contained in different housings and connected via a network and one device in which a plurality of modules is contained in one housing are both systems.

Furthermore, for example, an element described as a single device (or processing unit) may be divided and configured as a plurality of devices (or processing units). Conversely, elements described as a plurality of devices (or processing units) above may be configured collectively as a single device (or processing unit). Furthermore, an element other than those described above may be added to the configuration of each device (or processing unit). Furthermore, a part of the configuration of a given device (or processing unit) may be included in the configuration of another device (or another processing unit) as long as the configuration or operation of the system as a whole is substantially the same.

Furthermore, for example, the present technology can adopt a configuration of cloud computing which performs processing by allocating and sharing one function by a plurality of devices through a network.

Furthermore, for example, the program described above can be executed in any device. In this case, it is sufficient if the device has a necessary function (functional block or the like) and can obtain necessary information.

Furthermore, for example, each step described by the above-described flowcharts can be executed by one device or executed by being allocated to a plurality of devices. Moreover, in the case where a plurality of processes is included in one step, the plurality of processes included in this one step can be executed by one device or executed by being allocated to a plurality of devices.

Note that in a program executed by a computer, processing in steps describing the program may be executed chronologically along the order described in this specification, or may be executed concurrently, or individually at necessary timing such as when a call is made. Moreover, processing in steps describing the program may be executed concurrently with processing of another program, or may be executed in combination with processing of another program.

Note that the plurality of present technologies described in this specification can be performed alone independently of each other, unless a contradiction arises. Of course, any plurality of the present technologies can be performed in combination. In one example, the present technology described in any of the embodiments can be performed in combination with the present technology described in another embodiment. Furthermore, any of the present technologies described above can be performed in combination with another technology that is not described above.

Additionally, the present technology may also be configured as below.
(1) A signal processing apparatus including:
   a speech input unit configured to input speech of a user who is a sender; and
   a message converting unit configured to convert a message into a message which makes relationship between users smooth in accordance with content of the message accepted from the user who is the sender on the basis of a result of feeling estimation estimated using the speech input by the speech input unit.
(2) The signal processing apparatus according to (1), further including:
   an image input unit configured to input an image of the user who is the sender,
   in which the message converting unit converts the message into a message which makes relationship between users smooth in accordance with content of the message accepted from the user who is the sender on the basis of a result of feeling estimation estimated using the speech input by the speech input unit and the image input by the image input unit.
(3) The signal processing apparatus according to (1) or (2),
   in which the message converting unit converts the message into a message with positive expression in a case where the message includes negative expression.
(4) The signal processing apparatus according to (3), further including:
   an output control unit configured to control an output for confirming to the user who is the sender as to whether or not to convey the message with positive expression converted by the message converting unit.
(5) The signal processing apparatus according to any one of (1) to (4),
   in which the message converting unit adds presumption or opinion on a message conveying side to the message in a case where the message includes negative expression.
(6) The signal processing apparatus according to any one of (1) to (5),
   in which the message converting unit converts the message into a message with more negative expression in accordance with relationship with a speech partner or a situation even in a case where the message includes negative expression.
(7) The signal processing apparatus according to any one of (1) to (6),
   in which the message converting unit converts the message into a message with more positive expression in a case where the message includes positive expression.
(8) The signal processing apparatus according to any one of (1) to (7), further including:
   a feedback unit configured to,
   in a case where there is a response from a user who is a receiver who receives the message converted by the message converting unit, output the response from the user who is the receiver and content of the message converted by the message converting unit, to the user who is the sender.
(9) The signal processing apparatus according to (8),
   in which, in a case where there is no response from the user who is the receiver who receives the message converted by the message converting unit, the feedback unit outputs content of the message converted by the message converting unit, to which expression which makes relationship between users smooth is added, to the user who is the sender.
(10) The signal processing apparatus according to any one of (1) to (9), further including:
   an output control unit configured to output content of the message converted by the message converting unit to the user who is the receiver who is to receive the message.
(11) The signal processing apparatus according to (10),
   in which the output control unit outputs the content of the message converted by the message converting unit to the user who is the receiver at a timing in accordance with a situation of the user who is the receiver.
(12) The signal processing apparatus according to (10),
   in which the output control unit outputs the content of the message converted by the message converting unit to the user who is the receiver after making relationship with the user who is the receiver favorable through conversation with the user who is the receiver or through presentation of content.
(13) The signal processing apparatus according to (10),
   in which the output control unit outputs the content of the message converted by the message converting unit to the user who is the receiver along with an image or music.
(14) The signal processing apparatus according to (1),
   in which the message converting unit converts the message into a message with expression in a positive or negative direction which is judged using context upon output of the message.
(15) The signal processing apparatus according to (14),
   in which the message converting unit converts the message into a message with expression in a positive or negative direction which is judged using context upon reception of the message and context upon output of the message.
(16) The signal processing apparatus according to any one of (1) to (15), further including:
   a registering unit configured to register an NG word,
   in which the message converting unit prohibits use of the NG word registered by the registering unit.
(17) The signal processing apparatus according to any one of (1) to (16),
   in which, in a case where tone of the message is hurtful, the message converting unit performs processing of converting the message into text or speech output and causes the converted message to be presented to the user who is the sender.
(18) The signal processing apparatus according to any one of (1) to (17),
   in which, in a case where the message is not consistent with facial expression or action of the user who is the sender, the message converting unit adds complementary information to the message.
(19) The signal processing apparatus according to any one of (1) to (18),
   in which, in a case where an image of the user who is the sender is output in addition to the message, in a case where the user who is the sender gives inappropriate facial expression or action, the message converting unit converts also the image of the user who is the sender.
(20) A signal processing method executed by a signal processing apparatus, the method including:
   inputting speech of a user who is a sender; and
   converting a message into a message which makes relationship between users smooth in accordance with content of the message accepted from the user who is the sender on the basis of a result of feeling estimation estimated using the input speech.
(21) A program causing a computer to function as:
   a speech input unit configured to input speech of a user who is a sender; and
   a message converting unit configured to convert a message into a message which makes relationship between users smooth in accordance with content of the message accepted from the user who is the sender on the basis of a result of feeling estimation estimated using the speech input by the speech input unit.

### REFERENCE SIGNS LIST

- 21: Agent
- 31: Camera
- 32: Microphone
- 33: Speaker
- 41: Image input unit
- 42: Image processing unit
- 43: Speech input unit
- 44: Speech processing unit
- 45: State estimating unit
- 46: Message converting unit
- 47: Expression converting dictionary DB
- 48: User information DB
- 49: Output control unit
- 50: Speech output unit

## Claims

1. A signal processing apparatus comprising:
a speech input unit configured to input speech of a user who is a sender; and
a message converting unit configured to convert a message into a message which makes relationship between users smooth in accordance with content of the message accepted from the user who is the sender on a basis of a result of feeling estimation estimated using the speech input by the speech input unit.

2. The signal processing apparatus according to claim 1, further comprising:
an image input unit configured to input an image of the user who is the sender,
wherein the message converting unit converts the message into a message which makes relationship between users smooth in accordance with content of the message accepted from the user who is the sender on a basis of a result of feeling estimation estimated using the speech input by the speech input unit and the image input by the image input unit.

3. The signal processing apparatus according to claim 1,
wherein the message converting unit converts the message into a message with positive expression in a case where the message includes negative expression.

4. The signal processing apparatus according to claim 3, further comprising:
a notification control unit configured to control a notification for confirming to the user who is the sender as to whether or not to convey the message with positive expression converted by the message converting unit.

5. The signal processing apparatus according to claim 1,
wherein the message converting unit adds presumption or opinion on a message conveying side to the message in a case where the message includes negative expression.

6. The signal processing apparatus according to claim 1,
wherein the message converting unit converts the message into a message with more negative expression in accordance with relationship with a speech partner or a situation even in a case where the message includes negative expression.

7. The signal processing apparatus according to claim 1,
wherein the message converting unit converts the message into a message with more positive expression in a case where the message includes positive expression.

8. The signal processing apparatus according to claim 1, further comprising:
a feedback unit configured to, in a case where there is a response from a user who is a receiver who receives the message converted by the message converting unit, output the response from the user who is the receiver and content of the message converted by the message converting unit, to the user who is the sender.

9. The signal processing apparatus according to claim 8,
wherein, in a case where there is no response from the user who is the receiver who receives the message converted by the message converting unit, the feedback unit outputs content of the message converted by the message converting unit, to which expression which makes relationship between users smooth is added, to the user who is the sender.

10. The signal processing apparatus according to claim 1, further comprising:
an output control unit configured to output content of the message converted by the message converting unit to the user who is the receiver who is to receive the message.

11. The signal processing apparatus according to claim 10,
wherein the output control unit outputs the content of the message converted by the message converting unit to the user who is the receiver at a timing in accordance with a situation of the user who is the receiver.

12. The signal processing apparatus according to claim 10,
wherein the output control unit outputs the content of the message converted by the message converting unit to the user who is the receiver after making relationship with the user who is the receiver favorable through conversation with the user who is the receiver or through presentation of content.

13. The signal processing apparatus according to claim 10,
wherein the output control unit outputs the content of the message converted by the message converting unit to the user who is the receiver along with an image or music.

14. The signal processing apparatus according to claim 1,
wherein the message converting unit converts the message into a message with expression in a positive or negative direction which is judged using context upon output of the message.

15. The signal processing apparatus according to claim 14,
wherein the message converting unit converts the message into a message with expression in a positive or negative direction which is judged using context upon reception of the message and context upon output of the message.

16. The signal processing apparatus according to claim 1, further comprising:
a registering unit configured to register an NG word,
wherein the message converting unit prohibits use of the NG word registered by the registering unit.

17. The signal processing apparatus according to claim 1,
wherein, in a case where tone of the message is hurtful, the message converting unit performs processing of converting the message into text or speech output and causes the converted message to be presented to the user who is the sender.

18. The signal processing apparatus according to claim 1,
wherein, in a case where the message is not consistent with facial expression or action of the user who is the sender, the message converting unit adds complementary information to the message.

19. The signal processing apparatus according to claim 1,
wherein, in a case where an image of the user who is the sender is output in addition to the message, in a case where the user who is the sender gives inappropriate facial expression or action, the message converting unit converts also the image of the user who is the sender.

20. A signal processing method executed by a signal processing apparatus, the method comprising:
inputting speech of a user who is a sender; and
converting a message into a message which makes relationship between users smooth on a basis of a result of feeling estimation estimated in accordance with content of the message accepted from the user who is the sender using the input speech.

21. A program causing a computer to function as:
a speech input unit configured to input speech of a user who is a sender; and
a message converting unit configured to convert a message into a message which makes relationship between users smooth in accordance with content of the message accepted from the user who is the sender on a basis of a result of feeling estimation estimated using the speech input by the speech input unit.
